# EUROPEAN PATENT SPECIFICATION

(11) **EP 2 423 549 B1**
(45) Date of publication and mention of the grant of the patent: **28.11.2012**
(21) Application number: 11178237.1
(22) Date of filing: 22.08.2011
(51) Int. Cl.: F16K 39/06

(54) **Safety relief device for two-way sealed metal valve pocket**
Sicherheitsentlastungsvorrichtung für ein abgedichtetes Zweiwege-Metallventil
Système de sûreté pour soupape bidirectionnelle métallique scellée

(30) Priority: 26.08.2010 CN 201010263488
(43) Date of publication of application: 29.02.2012
(73) Proprietor: Jingdong Valve Co., Ltd, Oubei Town, Yongjia County Zhejiang (CN)
(72) Inventor: Sun, Gong-Zhen, Shangtang Town, Yongjia County Zhejian (CN); Jin, Li-Fan, Bacao Town, Cangnan County Zhejiang (CN)
(74) Representative: Mittler, Enrico

(56) References cited:
- US-A- 4 305 567
- US-A- 4 614 330
- US-A- 5 779 222

## Description

### Field of the Invention

The present invention relates to the field of fluid control, in particular a safety relief device for two-way sealed metal valve pocket.

### Background of the Invention

For existing two-way sealed metal valve pocket, the flow of fluid medium in pocket body can be cut off at two ways inside the valve pocket once the open/close element of valve is closed. An unusual pressure rise tends to occur in the pocket body, resulting in media such as gases and hydrocarbons held up in the pocket body being influenced by the temperature rise of pipe, etc. Therefore, pressure relief is necessary to prevent valve from being damaged, so as to ensure an operating stability of valve.

To solve above problems, a normal solution currently used is to provide a relief device on the external of valve. However, following defects exist in current relief device: (1) it must be installed outside valve and has a complex structure and high cost; (2) the external relief device exhausts high-temperature, poisonous or harmful gases directly to the atmosphere, resulting in potential dangers as environmental pollution, which cannot meet the environmental protection requirements; (3) the relief device can be damaged by human or non-natural factors.

Several safety relief devices have been shown for example in documents US 5 779 222, US 4 305 567 or US 4 614 330.

### Summary of the Invention

The objective of present invention is to provide a safety relief device for two-way sealed metal valve pocket, having a simple structure and low cost, directly provided inside the pipe of valve, that means the fluid pressure of valve pocket is relieved back to the pipe, in a safe and environment-friendly way.

The technical solution of present invention is as follows: a safety relief device for two-way sealed metal valve pocket comprises a main pocket body, which includes an overflow cavity connective to the inside of said valve pocket and a relief cavity connective to the outside pipe of said valve pocket, between which a connecting passage is provided; one end of said overflow cavity is closed, and a reset unit is set inside the overflow cavity so that the other end thereof is connected to or disconnected from the internal of said valve pocket.

Improvements for present invention can be made as follows: said overflow cavity is internally provided with an overflow casing having a shape adaptive to the cavity; and said rest unit is a spring reset unit, provided inside said overflow casing.

Further, improvements for present invention can be made as follows: one outside end of said overflow casing is closed, and the inside end thereof is provided with overflow hole connective to the internal of said valve pocket; said spring reset unit comprises a spring and a sealing steel ball that is positioned at one end of said spring and used for sealing said overflow hole.

Further, improvements for present invention can be made as follows: said overflow casing is also internally provided with an adjusting plug screw for adjusting pressure of spring, and both ends of said spring are tightly fixed respectively on said adjusting plug screw and said sealing steel ball.

The overflow cavity is sealed by a sealing cap positioned inside said overflow casing.

Further, improvements for present invention can be made as follows: said relief cavity is internally provided with a backflow-resistant casing having a shape adaptive to the cavity; a relief hole for is provided on the inside end of said backflow-resistant casing connective to the connection passage, and a relief screw plug is provided on the outside end thereof connective to the outside pipe of said valve pocket.

the backflow-resistant casing of present invention is internally provided with a backflow-resistant steel ball for sealing the relief hole.

beneficial effects of present invention are as follows:

(1) the present invention is simply structured and novel with a low cost, rendering an external relief device unnecessary and greatly reducing the cost for user to buy an extra relief device;

(2) the present invention realizes a sealing function of two-way sealed metal valve, in which, for security, a relief hole is drilled at one side of gate valve or valve seat and the two-way sealed valve is changed into a one-way sealed valve. By the present invention, a relief hole is unnecessary, while a two-way sealing function for gate valve is ensured.

(3) the pressure of fluid medium in the valve pocket is relieved back to the pipe, thereby effectively avoiding a direct exhaust of high-temperature, poisonous or harmful gases to the atmosphere, which can meet the environmental protection requirements;

(4) the relief device of present invention is provided inside the pipe of valve, thus the risk of being damaged by human or non-natural factors is greatly reduced;

(5) even if the relief device is out of service or damaged by other factors, a backflow-resistant steel ball provided on the relief device can still seal an inlet of valve without any potential danger.

### Brief description of the drawings

Fig. 1 is a sectional drawing for the embodiment 1 of the present invention;

Fig. 2 is a partial sectional drawing for the ball body of Fig. 1;

Fig. 3 is an enlarged partial sectional drawing for the ball body of Fig. 1 provided with a safety relief device;

Fig. 4 is a vertical view for Fig. 2;

Fig. 5 is a sectional drawing for the embodiment 2;

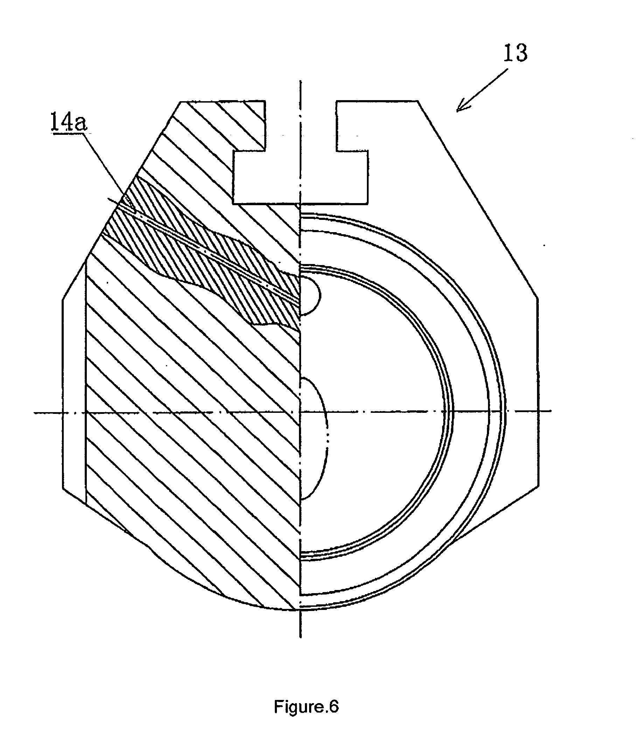

Fig. 6 is a half section view for Fig. 5;

Fig. 7 is a sectional drawing for the embodiment 3 of the present invention.

The numbers in these drawings respectively represent: 1. Overflow cavity; 2. Relief cavity; 3. Connection passage; 4 Backflow-resistant steel ball; 5. Overflow casing; 6. Spring; 7. Sealing steel ball; 8. Adjusting screw plug; 9. Sealing cap; 10. Backflow-resistant casing; 11. Relief screw plug; 12. Ball body; 13. Flashboard; 14a, 14b. Relief holes; 15. Faucet body; 16. Valve body; 17. Valve cap; 18. Valve seat; 51. Overflow hole.

### Embodiments of the Invention

A further explanation for the present invention is made as follows based on the drawings.

Embodiment 1

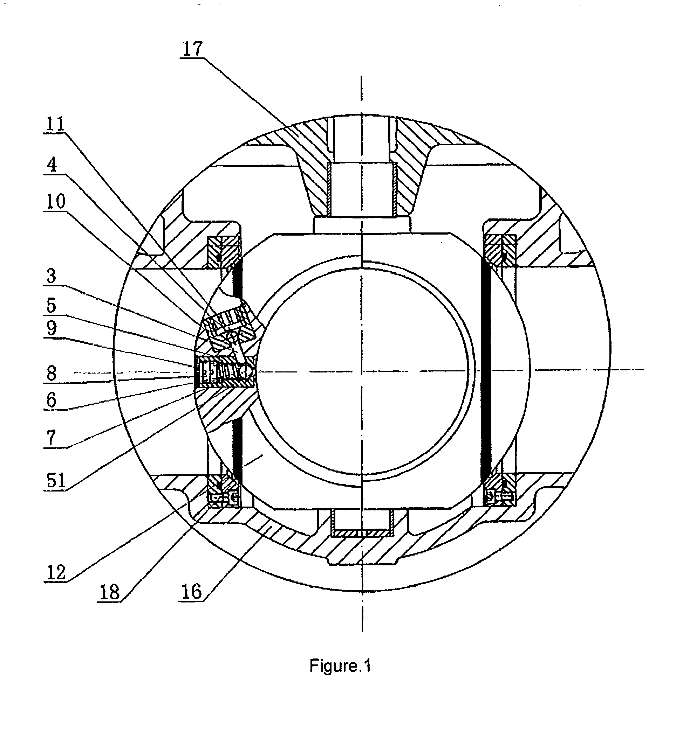

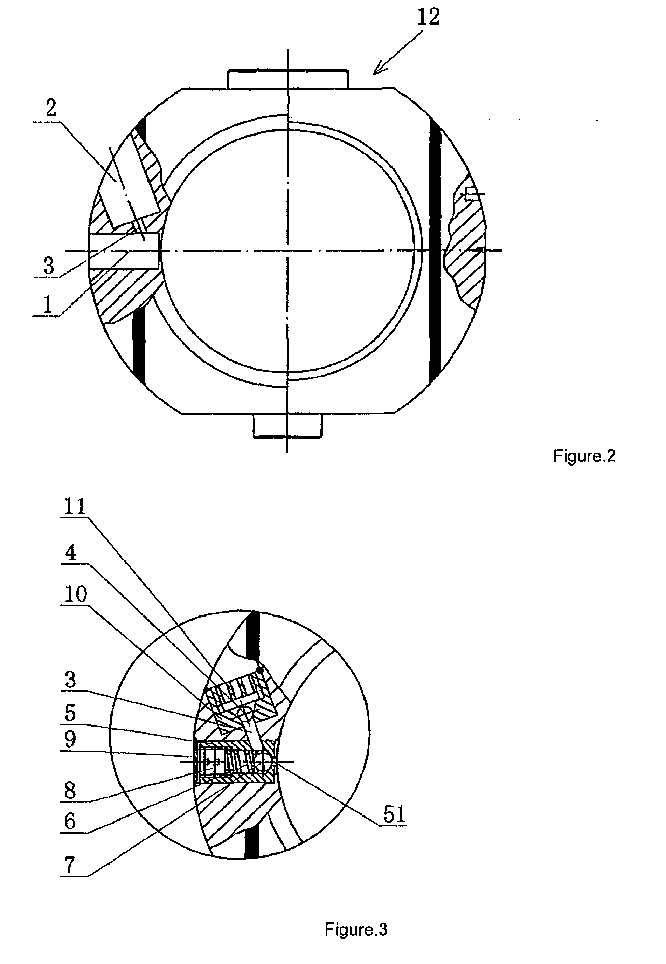

One of the embodiments of the present invention is as shown in Fig.1-4. A safety relief device for two-way sealed metal valve pocket, comprising a main pocket body, which includes an overflow cavity 1 connective to the inside of said valve pocket and a relief cavity 2 connective to the outside pipe of said valve pocket, between which a connecting passage 3 is provided; wherein one end of said overflow cavity 1 is closed, and a reset unit is set inside the overflow cavity 1 so that the other end thereof is connected to or disconnected from the internal of said valve pocket.

In this embodiment, the present invention is applied to a eccentric two-way hard sealed metal valve pocket, which is specifically as follows: a safety relief device is provided on the ball body 12 of said eccentric two-way hard sealed metal valve pocket, that means side wall of said ball body 12 is provided with a corresponding accommodating cavity as the main cavity and connection passage 3 of said safety relief device. The overflow cavity 1 is internally provided with an overflow casing 5 having a shape adaptive to the cavity; and said reset unit is a spring reset unit, provided inside said overflow casing 5. One outside end of said overflow casing 5 is closed, and the inside end thereof is provided with overflow hole 51 connective to the internal of said valve pocket; said spring reset unit comprises a spring 6 and a sealing steel ball 7 that is positioned at one end of said spring 6 and used for sealing said overflow hole 51. The overflow casing 5 is also internally provided with an adjusting plug screw 8 for adjusting pressure of spring 6, and both ends of said spring 6 are tightly supported respectively on said adjusting plug screw 8 and said sealing steel ball 7, wherein the release pressure of said spring 6 can be easily adjusted by screwing-in or screwing-out of adjusting plug screw 8. The overflow cavity 1 is sealed by a sealing cap 9 positioned inside said overflow casing 5, i.e., the sealing cap 9 is fixed on the external opening of said overflow cavity 1 in a form of sealing, to prevent the undeterminable set pressure of spring 6, resulted from uncertain medium pressure in the pipe at the back of valve. The relief cavity 2 is internally provided with a backflow-resistant casing 10 having a shape adaptive to the cavity; a relief hole provided on the inside end of said backflow-resistant casing 10 connective to the connection passage 3, and a relief screw plug 11 is provided on the outside end thereof connective to the outside pipe of said valve pocket. The outside end of said backflow-resistant casing 10 has a fixed seal to the inner wall of said relief cavity 2. The backflow-resistant casing 10 is internally provided with a backflow-resistant steel ball 4 for sealing the relief hole. The relief screw plug 11 can confine the backflow-resistant steel ball 4 as well as relieve unusual pressure rise. The inside wall of relief hole on said backflow-resistant casing 10 is provided with a section of funnel-shaped cone, of which the smaller opening is containable for backflow-resistant steel ball 4 and used for sealing said relief hole.

Operating principle of present invention is as follows:

In normal state, the ball body 12 is held in the valve body 16, provided with a valve cap 17 in a form of sealing; hard alloying claddings are provided correspondingly on the valve body 12 and the valve seat 18, which are both sealed, that means the ball valve is closed. The sealing steel ball 7 seals the overflow hole 51 under the pressure of said spring 6, thus the valve cavity is separated from the external thereof. The backflow-resistant steel ball 4 is tightly supported by the cone of relief hole, which is therefore closed, so as to separate the relief cavity 2 from the connection passage 3.

If the pressure of valve cavity rises 1.1-1.3 times as the standard pressure, the spring 6 internally provided in said relief device is released, and the fluid medium inside valve cavity thrusts aside the sealing steel ball 7 and backflow-resistant steel ball 4, thereby relieving the inner pressure. The fluid medium then discharges from the valve cavity to the overflow casing 5 and backflow-resistant casing 10, and finally is relieved to the pipe of valve.

If the pressure of valve cavity is lower than the return pressure of sealing steel ball 7, the spring resets and reseals the overflow hole 51. The backflow-resistant steel ball 4 also reseals the relief hole. Backflow-resistant steel ball 4 is set, so it can effectively avoid that the spring 6 for relief cannot be rightly released due to a medium pressure from the pipe.

Embodiment 2

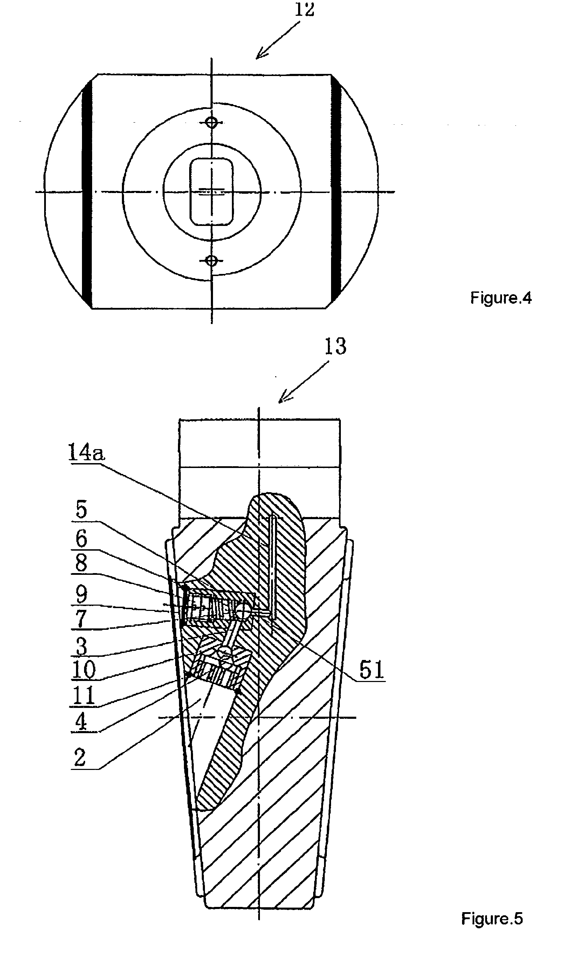

The second embodiment of the present invention is as shown in Fig. 4 and 5, in which the invention is applied to steel gate valve, which is different from the above embodiment. In this embodiment, the safety relief device is provided on flashboard 13, where an accommodating cavity is provided as the main cavity and connection passage 3 of said safety relief device. The main cavity includes an overflow cavity 1 connective to the internal of valve cavity and a relief cavity 2 connective to the external pipe of said valve cavity. Specifically, one side of said flashboard 13 provided with safety relief device has a drilled relief hole 14a connective to the valve cavity and overflow cavity 1. The operating principle of this embodiment is same with the embodiment 1.

Embodiment 3

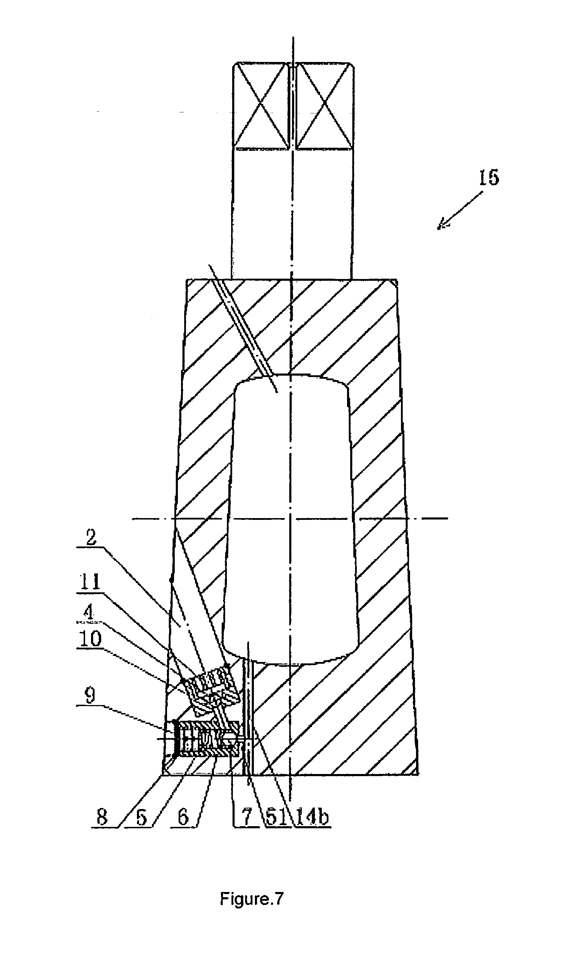

The third embodiment of the present invention is as shown in Fig. 7, in which the invention is applied to sealed metal plug valve, which is different from embodiment 1. In this embodiment, the safety relief device is provided on the faucet body 15 of said plug valve, where an accommodating cavity is provided as the main cavity and connection passage 3 of said safety relief device. The main cavity includes an overflow cavity 1 connective to the internal of valve cavity and a relief cavity 2 connective to the external pipe of said valve cavity. The faucet body 15 is provided with a relief hole 14b connective to an overflow cavity 1 and valve cavity. The operating principle of this embodiment is the same with the embodiment 1.

The foregoing embodiments are the preferable of present invention, which can not be used exclusively to define the scope of rights of present invention. Therefore, equivalent changes based on patent scope of the invention application still belong to the coverage of the present invention.

For clarity reasons, the term "two-way sealed metal valve pocket "should be understood as "two-way sealed metal valve" and terms like "pocket body" or "valve pocket" should be both understood as "valve element".

## Claims

1. A safety relief device for two-way sealed metal valve, comprising:
a main valve element, having an overflow cavity (1) connective to the inside of said valve element, and a relief cavity (2) connective to the outside of said valve element, and between which a connecting passage (3) is provided; wherein one end of said overflow cavity (1) is closed, and a reset unit is set inside the overflow cavity (1) so that the other end thereof is connected to or disconnected from the internal of said valve element.

2. The safety relief device for two-way sealed metal valve according to claim 1, wherein said overflow cavity (1) is infernally provided with an overflow casing (5) having a shape adaptive to the cavity; and wherein said reset unit is a spring reset unit, provided inside said overflow casing (5).

3. The safety relief device for two-way sealed metal valve according to claim 2, wherein one outside end of said overflow casing (5) is closed, and the inside end thereof is provided with overflow hole (51) connective to the internal of said valve element, and wherein said spring reset unit comprises a spring (6) and a sealing steel ball (7) that is positioned at one end of said spring (6) and used for sealing said overflow hole (51).

4. The safety relief device for two-way sealed metal valve according to claim 3, wherein said overflow casing (5) is also internally provided with an adjusting plug screw (8) for adjusting pressure of spring (6), and both ends of said spring (6) are tightly fixed respectively on said adjusting plug screw (8) and said sealing steel ball (7).

5. The safety relief device for two-way sealed metal valve according to claim 4, wherein said overflow cavity (1) is sealed by a sealing cap (9) positioned outside said overflow casing (5).

6. The safety relief device for two-way sealed metal valve according to any of claims 2-5, wherein said relief cavity (2) is internally provided with a backflow-resistant casing (10) having a shape adaptive to the cavity, and a relief hole on the inside end of said backflow-resistant casing (10) connective to the connection passage (3) backflow-resistant, and a relief screw plug (11) is provided on the outside end of said backflow-resistant casing (10) thereof connective to the outside of said valve element.

7. The safety relief device for two-way sealed metal valve according to claim 6, wherein said backflow-resistant casing (10) is internally provided with a backflow-resistant steel ball (4) for sealing the relief hole.

8. The safety relief device for two-way sealed metal valve according to claim 7, wherein the inside wall of relief hole on said backflow-resistant casing (10) is provided with a section of funnel-shaped cone, of which the smaller opening is containable for backflow-resistant steel ball (4) and used for sealing said relief hole.

## Patentansprüche

1. Überdruckentlastungsvorrichtung für ein in zwei Richtungen gedichtetes Metallventil, mit:
einem Hauptventilelement mit einer Überlaufkammer (1), die mit dem Inneren des Ventilelements verbindbar ist, und einer Entlastungskammer (2), die mit der Außenseite des Ventilelements verbindbar ist, wobei zwischen den beiden Kammern ein Verbindungskanal (3) ausgebildet ist, wobei ein Ende der Überlaufkammer (1) geschlossen ist, und wobei eine Rückstelleinheit im Inneren der Überlaufkammer (1) derart angeordnet ist, dass eine Verbindung zwischen dem anderen Ende der Überlaufkammer und dem Inneren des Ventilelements hergestellt oder unterbrochen wird.

2. Vorrichtung nach Anspruch 1, wobei im Inneren der Überlaufkammer (1) ein Überlaufgehäuse (5) mit einer der Kammer angepassten Form bereitgestellt wird, und wobei die Rückstelleinheit eine im Inneren des Überlaufgehäuses (5) angeordnete Federrückstelleinheit ist.

3. Vorrichtung nach Anspruch 2, wobei ein außenseitiges Ende des Überlaufgehäuses (5) geschlossen ist und an seinem innenseitigen Ende eine mit dem Inneren des Ventilelements verbindbare Überlauföffnung (51) ausgebildet ist, und wobei die Federrückstelleinheit eine Feder (6) und eine abdichtende Stahlkugel (7) aufweist, die an einem Ende der Feder (6) angeordnet ist und zum Abdichten der Überlauföffnung (51) verwendet wird.

4. Vorrichtung nach Anspruch 3, wobei im Inneren des Überlaufgehäuses (5) außerdem eine Einstell-Nerschlussschraube (8) zum Einstellen des Drucks der Feder (6) angeordnet ist, und wobei beide Enden der Feder (6) an der Einstell-Nerschlussschraube (8) bzw. an der abdichtenden Stahlkugel (7) stabil befestigt sind.

5. Vorrichtung nach Anspruch 4, wobei die Überlaufkammer (1) durch eine außerhalb des Überlaufgehäuses (5) angeordnete Dichtkappe (9) abgedichtet ist.

6. Vorrichtung nach einem der Ansprüche 2 bis 5, wobei im Inneren der Entlastungskammer (2) ein rückflussbeständiges Gehäuse (10) mit einer der Kammer angepassten Form angeordnet ist und eine mit dem Verbindungskanal (3) rückflussbeständig verbindbare Entlastungsöffnung am innenseitigen Ende des rückflussbeständigen Gehäuses (10) ausgebildet ist, und wobei eine Einstell-/Verschlussschraube (11) am außenseitigen Ende des rückflussbeständigen Gehäuses (10) angeordnet ist, das mit der Außenseite des Ventilelements verbindbar ist.

7. Vorrichtung nach Anspruch 6, wobei im Inneren des rückflussbeständigen Gehäuses (10) eine rückflussbeständige Stahlkugel (4) zum Abdichten der Entlastungsöffnung angeordnet ist.

8. Vorrichtung nach Anspruch 7, wobei die Innenwand der Entlastungsöffnung auf dem rückflussbeständigen Gehäuse (10) einen Abschnitt in der Form eines trichterförmigen Kegels aufweist, in dessen kleinerer Öffnung die rückflussbeständige Stahlkugel (4) aufgenommen und zum Abdichten der Entlastungsöffnung verwendet werden kann.

## Revendications

1. Dispositif de détente de sécurité pour vanne de métal hermétiquement scellée à deux voies, comprenant :
un élément de vanne principal, comportant une cavité de trop-plein (1) pouvant assurer une liaison avec l'intérieur dudit élément de vanne, et une cavité de détente (2) pouvant assurer une liaison avec l'extérieur de l'élément de vanne, et entre lesquelles est situé un passage de liaison (3) ; une extrémité de ladite cavité de trop-plein (1) étant fermée, et une unité de rétablissement étant disposée à l'intérieur de la cavité de trop-plein (1), de telle sorte que l'autre extrémité de celle-ci soit reliée à l'intérieur dudit élément de vanne ou déconnectée de celui-ci.

2. Dispositif de détente de sécurité pour vanne de métal hermétiquement scellée à deux voies selon la revendication 1, dans lequel ladite cavité de trop-plein (1) est munie intérieurement d'une enceinte de trop-plein (5) ayant une forme s'adaptant à la cavité ; et dans lequel ladite unité de rétablissement est une unité de rétablissement à ressort, disposée à l'intérieur de ladite enceinte de trop-plein (5).

3. Dispositif de détente de sécurité pour vanne de métal hermétiquement scellée à deux voies selon la revendication 2, dans lequel une extrémité extérieure de ladite enceinte de trop-plein (5) est fermée, et l'extrémité intérieure de celle-ci est munie d'un trou de trop-plein (51) pouvant assurer une liaison avec l'intérieur dudit élément de vanne, et dans lequel ladite unité de rétablissement à ressort comprend un ressort (6) et une bille en acier de scellement hermétique (7) qui est positionnée à une extrémité dudit ressort (6) et utilisée pour sceller hermétiquement ledit trou de trop-plein (51).

4. Dispositif de détente de sécurité pour vanne de métal hermétiquement scellée à deux voies selon la revendication 3, dans lequel ladite enceinte de trop-plein (5) est également intérieurement munie d'une vis de bouchon de réglage (8) pour régler la pression du ressort (6), et les deux extrémités dudit ressort (6) sont étroitement fixées, respectivement, sur ladite vis de bouchon de réglage (8) et sur ladite bille en acier de scellement hermétique (7).

5. Dispositif de détente de sécurité pour vanne de métal hermétiquement scellée à deux voies selon la revendication 4, dans lequel ladite cavité de trop-plein (1) est hermétiquement scellée par un capuchon de scellement hermétique (9) positionné à l'extérieur de ladite enceinte de trop-plein (5).

6. Dispositif de détente de sécurité pour vanne de métal hermétiquement scellée à deux voies selon l'une quelconque des revendications 2 à 5, dans lequel ladite cavité de détente (2) est intérieurement munie d'une enceinte résistant à un retour d'écoulement (10), ayant une forme s'adaptant à la cavité, et un trou de détente sur l'extrémité intérieure de ladite enceinte résistant à un retour d'écoulement (10) pouvant assurer une liaison avec le passage de liaison (3), résistant à un retour d'écoulement, et un bouchon de vis de détente (11) étant disposé sur l'extrémité extérieure de ladite enceinte résistant à un retour d'écoulement (10) de celui-ci, pouvant assurer une liaison avec l'extérieur dudit élément de vanne.

7. Dispositif de détente de sécurité pour vanne de métal hermétiquement scellée à deux voies selon la revendication 6, dans lequel ladite enceinte résistant à un retour d'écoulement (10) est intérieurement munie d'une bille d'acier résistant à un retour d'écoulement (4) pour sceller hermétiquement le trou de détente.

8. Dispositif de détente de sécurité pour vanne de métal hermétiquement scellée à deux voies selon la revendication 7, dans lequel la paroi intérieure du trou de détente sur ladite enceinte résistant à un retour d'écoulement (10) est munie d'une section de cône en forme d'entonnoir, dont la plus petite ouverture peut être contenue pour la bille d'acier résistant à un retour d'écoulement (4) et utilisée pour sceller hermétiquement ledit trou de détente.
